# EUROPÄISCHE PATENTSCHRIFT

(11) **EP 4 009 808 B1**
(45) Veröffentlichungstag und Bekanntmachung des Hinweises auf die Patenterteilung: **01.03.2023**
(21) Anmeldenummer: 20742719.6
(22) Anmeldetag: 17.07.2020
(51) Int. Cl.: A23K 20/10, A23K 20/105, A23K 50/30, A23K 50/75, A23K 20/142

(54) **KONZENTRAT ZUR HERSTELLUNG EINER TRÄNKLÖSUNG**
CONCENTRATE FOR PREPARING A DRINKING SOLUTION
CONCENTRÉ POUR LA PRÉPARATION D'UNE SOLUTION BUVABLE

(30) Priorität: 09.08.2019 DE 102019121526
(43) Veröffentlichungstag der Anmeldung: 15.06.2022
(73) Patentinhaber: Alzchem Trostberg GmbH, 83308 Trostberg (DE)
(72) Erfinder: THALHAMMER, Franz, 83308 Trostberg (DE); VOHBURGER, Gisela, 83308 Trostberg (DE); MÜLLER, Olivia, 85570 Markt Schwaben (DE)
(74) Vertreter: Weickmann & Weickmann PartmbB
(86) Internationale Anmeldenummer: PCT/EP2020/070261
(87) Internationale Veröffentlichungsnummer: WO 2021/028149

(56) Entgegenhaltungen:
- WO-A1-2006/092298
- WO-A1-2007/014756
- MILAN VRANES ET AL: "Experimental and computational study of guanidinoacetic acid self-aggregation in aqueous solution", FOOD CHEMISTRY, Bd. 237, 1. Dezember 2017 (2017-12-01), Seiten 53-57, XP055726092, NL ISSN: 0308-8146, DOI: 10.1016/j.foodchem.2017.05.088

## Beschreibung

Die vorliegende Erfindung betrifft ein Konzentrat zur Herstellung einer Tränklösung in der Tierhaltung, das *N*-(Aminoiminomethyl)-2-aminoethansäure und Ameisensäure enthält und das eine über das bekannte Maß erhöhte Konzentration an *N*-(Aminoiminomethyl)-2-aminoethansäure aufweist.

*N*-(Aminoiminomethyl)-2-aminoethansäure (CAS-Nr. 352-97-6, Summenformel C₃H₇N₃O₂), auch als Guanidinoessigsäure, Guanidinoacetat, Glycocyamin, *N-*Amidinoglycin oder *N*-(Aminoiminomethyl)-glycin bekannt, ist eine Guanidinocarbonsäure mit vielfältigen Anwendungen, u.a. in der Synthese von chemischen Produkten, insbesondere Pharmazeutika (vgl. WO 2000/059528 A1), zur direkten Anwendung als pharmazeutischer Wirkstoff bei Nierenerkrankungen (vgl. JPS 6054320 A) oder neurodegenerativen Erkrankungen (vgl. CN 106361736 A), in der Herstellung von Polymeren (vgl. Du, Shuo et. al., Journal of Materials Science (2018), 53(1), 215-229) und als Komplexbildner für Metalle (vgl. Lopes de Miranda et.al., Polyhedron (2003), 22(2), 225-233 bzw. Singh, Padmakshi et. al, Oriental Journal of Chemistry (2008), 24(1), 283-286).

*N*-(Aminoiminomethyl)-2-aminoethansäure lässt sich z.B. nach Strecker, M. (Jahresber. Fortschr. Chem. Verw. (1861), 530) aus Glycin durch Umsetzung mit Cyanamid herstellen. Alternativ kann *N*-(Aminoiminomethyl)-2-aminoethansäure z.B. durch Umsetzung von Glycin mit S-Methylisothioharnstoff-Jodid unter Verwendung von Kaliumhydroxid als Base hergestellt werden (vgl. US 2654779 A). Auch die Umsetzung von Chloressigsäure mit Ammoniak zu Glycinhydrochlorid und dessen weitere Umsetzung mit Cyanamid werden beschrieben (vgl. US 2620354 A).

Vielfältige Studien haben unter anderem auch gezeigt, dass der Einsatz von *N*-(Aminoiminomethyl)-2-aminoethansäure während der Aufzucht, während der Haltung oder in der Mast von Geflügel oder Schweinen eine Futtermittelersparnis, eine Verbesserung der Futteraufnahme und/oder eine Steigerung der Mastleistung bewirkt. So werden mit den internationalen Patentanmeldungen WO 2005/120246 A1, WO 2006/092298 A1, WO 2007/014756 A1, WO 2007/098952 A1 und WO 2009/012960 A2 Futtermittel bzw. Futtermittelzusätze auf Basis von *N*-(Aminoiminomethyl)-2-aminoethansäure sowie Salze und Lösungen von *N*-(Aminoimino-methyl)-2-aminoethansäure beschrieben.

*N-*(Aminoimino-methyl)-2-aminoethansäure ist seit einiger Zeit auf dem Markt erhältlich und ist in der Geflügel- und Schweinemast als Futtermittelzusatz zugelassen. Als Futtermittelzusatz, beispielsweise für Broiler, wird *N-*(Aminoiminomethyl)-2-aminoethansäure in einer Menge von 600 mg/kg Futter (0,06 Gew.-% bezogen auf das Futter) eingesetzt. In dieser Anwendung wird die *N-*(Aminoimino-methyl)-2- aminoethansäure als Feststoff bzw. Feststoffzusammensetzung dem zu verabreichenden Futter beigemengt. In der Praxis hat sich herausgestellt, dass eine zielgerichtete Verwendung des Zusatzes aufgrund der einzusetzenden relativ geringen Menge an Wirkstoff ein effektives Homogenisieren der Futterzusammensetzung voraussetzt.

*N*-(Aminoiminomethyl)-2-aminoethansäure zeigt darüber hinaus auch weitere positive Effekte nicht nur bei diesen Tierarten, sondern auch bei anderen Masttieren und bei Tieren zur Zucht, sowie Tieren die besondere Leistung erbringen wie Legehennen, oder Tieren im Leistungssport.

Neben einer besseren Fleischbildung ist vor allem eine positive Auswirkung auf den allgemeinen Gesundheitszustand, das Immunsystem und die Stressresistenz gegeben. Beispielsweise ist die Sterblichkeit von Tieren bei Hitzeperioden in warmen Ländern ein großes Problem. Es konnte gezeigt werden, dass durch Verfüttern von *N*-(Aminoiminomethyl)-2-aminoethansäure die Sterblichkeit reduziert werden konnte. Die Tiere konnten den Hitzestress besser überstehen. Der Effekt ist vermutlich auf das aus *N*-(Aminoiminomethyl)-2-aminoethansäure gebildete Kreatin zurückzuführen, welches zu einer verbesserten Versorgung des besonders betroffenen Gewebes mit Wasser führt. In Phasen hoher Umgebungstemperaturen reagieren die Tiere häufig mit einer geringeren Nahrungsaufnahme aber gesteigertem Trinken.

Auch bei Stress durch Transporte, Stallwechsel oder nach Krankheiten haben Tiere einen erhöhten Energiebedarf, der durch die Gabe von *N*-(Aminoiminomethyl)-2-aminoethansäure gedeckt werden kann.

In allen diesen Fällen wäre die Möglichkeit einer flexiblen Gabe von *N-*(Aminoiminomethyl)-2-aminoethansäure wünschenswert.

Eine solche Möglichkeit könnte realisiert werden, in dem den Tieren *N*-(Aminoiminomethyl)-2-aminoethansäure als Tränklösung zur Verfügung gestellt wird. Die Verabreichung könnte alleine über das Trinkwasser oder zusätzlich zu einer Basisversorgung über ein festes Futter erfolgen.

In den vergangenen Jahren wurde für die Mast von Geflügel und Schweinen eine Reihe an Tränksystemen zur kontinuierlichen Bereitstellung von Wasser für die Ernährung der Tiere entwickelt. Diesen Tränksystemen ist gemeinsam, dass den Tieren das Wasser ad-libitum, nämlich zur freien Verfügung, jedoch kontrolliert und bezüglich der verabreichten Menge nachvollziehbar bereitgestellt wird. Über diese Tränksysteme können den Tieren sowohl veterinärmedizinische Wirkstoffe als auch Futtermittelzusatzstoffe verabreicht werden. Somit hat sich in der vergangenen Zeit auch eine Methode zur Verabreichung von veterinärmedizinischen Wirkstoffen und Futtermittelzusatzstoffen etabliert, die sich dieser Tränksysteme bedienen. Eine Voraussetzung hierfür ist, dass es sich um wasserlösliche Wirk- und Futtermittelzusatzstoffe handelt.

Wegen der geringen Löslichkeit von *N*-(Aminoiminomethyl)-2-aminoethansäure in Wasser (ca. 0,4 % bei 25 °C) ist eine wässrige Lösung als Konzentrat nicht anwendbar. Andererseits birgt die Verwendung einer Suspension immer die Gefahr einer Entmischung und kann damit zu unerwünschten oder gar schädlichen Fehldosierungen führen.

Somit besteht seitens der Anwender ein erhöhter Bedarf an einer Formulierung von *N*-(Aminoiminomethyl)-2-aminoethansäure, die eine verbesserte Löslichkeit aufweist. Um diese Problematik zu lösen, wurden Salze, Anlagerungs- und Komplexverbindungen von *N*-(Aminoiminomethyl)-2-aminoethansäure vorgeschlagen, die eine verbesserte Löslichkeit in Wasser aufweisen sollen.

Nachteilig dabei ist, dass sich Salze von organischen Säuren aufgrund der hohen pKs-Werte im Vergleich zum pKs-Wert von *N*-(Aminoiminomethyl)-2-aminoethansäure nicht, oder nur teilweise im Gleichgewicht bilden und nicht isoliert werden können. Alle Derivate von *N*-(Aminoiminomethyl)-2-aminoethansäure mit organischen Säuren besitzen zudem weiterhin eine ungenügende Löslichkeit in Wasser. Lediglich starke anorganische Säuren wie Salzsäure, Schwefelsäure oder Salpetersäure bilden Salze aus. Diese sind auch deutlich besser löslich, haben aber den Nachteil, dass sie ihrerseits sehr stark sauer reagieren und sehr korrosiv gegenüber vielen Werkstoffen sind. Die Akzeptanz dieser Salze durch die Tiere ist ebenfalls ungewiss.

Ein besonderes Problem bei der Herstellung und Anwendung von Flüssigformulierungen ist das Keimwachstum und der biologische Abbau der enthaltenen Wertstoffe. Auch *N*-(Aminoiminomethyl)-2-aminoethansäure unterliegt in feuchter oder gelöster Form einem mikrobiellen Abbau.

Der Erfindung liegt daher die Aufgabe zugrunde, *N*-(Aminoiminomethyl)-2-aminoethansäure in flüssiger Lösung bereitzustellen, die eine im Vergleich zu den bekannten flüssigen Formen erhöhte Konzentration an *N*-(Aminoiminomethyl)-2-aminoethansäure aufweist. Diese flüssige Form soll ohne aufwendige Weiterverarbeitung zur Fütterung von Masttieren einsetzbar sein, die oben angeführten Nachteile nicht aufweisen und keine Bestandteile enthalten, die für die Mast nicht zulässig sind.

Gelöst werden diese Aufgaben durch ein Konzentrat gemäß Anspruch 1. Bevorzugte Ausführungsformen der Erfindung sind in den Unteransprüchen angegeben, die wahlweise miteinander kombiniert werden können.

Somit ist gemäß einer ersten Ausführung ein Konzentrat Gegenstand der vorliegenden Erfindung, das eine Lösung umfasst, die ihrerseits *N-*(Aminoiminomethyl)-2-aminoethansäure enthält, wobei die Lösung bezogen auf das Gesamtgewicht der Lösung enthält:
a) 1,0 bis 33,0 Gew.-% *N*-(Aminoiminomethyl)-2-aminoethansäure, und
b) mindestens 2,0 Gew.-% Ameisensäure, und
wobei der Inhaltsstoff a) in der Lösung in gelöster Form vorliegt.

Erfindungswesentlich weist das Konzentrat diese Mengen an Inhaltstoffen bei 25 °C auf. Weiterhin ergänzen sich die Inhaltstoffe des Konzentrats gemäß der vorliegenden Erfindung unabhängig von der Art und Anzahl der Inhaltstoffe in jedem Fall zu 100 Gew.-%.

Die Löslichkeit eines Stoffes gibt an, in welchem Umfang ein Reinstoff in einem Lösungsmittel gelöst werden kann. Sie bezeichnet die Eigenschaft des Stoffes, sich unter homogener Verteilung im Lösungsmittel zu lösen. *N*-(Aminoiminomethyl)-2-aminoethansäure hat eine geringe Löslichkeit in Wasser. So weist eine gesättigte Lösung von *N*-(Aminoiminomethyl)-2-aminoethansäure in Wasser eine Konzentration von ca. 3,5 g/l (20 °C) bzw. 4,0 g/l (25 °C) auf. Im Rahmen der vorliegenden Erfindung wurde nunmehr gefunden, dass *N*-(Aminoiminomethyl)-2-aminoethansäure in Ameisensäure verschiedenster Konzentration eine im Vergleich zu bekannten Lösungen von *N*-(Aminoiminomethyl)-2-aminoethansäure deutlich höhere Löslichkeit aufweist. So konnte gezeigt werden, dass *N*-(Aminoiminomethyl)-2-aminoethansäure in Ameisensäure-haltigen Lösungen eine im Vergleich zu wässrigen Lösungen ohne weitere Inhaltstoffe bis zu 80-fach höhere Löslichkeit aufweisen kann. Die Konzentration von *N*-(Aminoiminomethyl)-2-aminoethansäure in derartigen Lösungen beträgt bis zu 330 g/l (25 °C). Somit kann ein Konzentrat zur Verfügung gestellt werden, dass in der Mast von Geflügel hervorragend einsetzbar ist. Neben dem gewünschten Futtermittelzusatzstoff *N*-(Aminoimino-methyl)-2-aminoethansäure enthält die Lösung ausschließlich Ameisensäure, die ihrerseits keinen schädlichen Einfluss auf die Mastleistung oder die Gesundheit der Tiere hat.

Die Erfindung beruht neben dem überraschenden Effekt der hervorragenden Löslichkeit in Ameisensäure weiterhin auf der Herstellung eines flüssigen Konzentrats von gelöstem *N*-(Aminoiminomethyl)-2-aminoethansäure in Ameisensäure oder einem Gemisch, das Ameisensäure als wesentlichen Bestandteil enthält und dessen Verwendung als Zusatz zur Tiertränke.

Dieses Konzentrat, das einfach und exakt zu Trinkwasser zu dosieren ist und es erlaubt, auch sehr kleine Konzentrationen sicher einzustellen, kann einen außergewöhnlich hohen Gehalt an *N*-(Aminoiminomethyl)-2-aminoethansäure aufweisen. Es ist mit den in der Tierhaltung üblichen Einrichtungen zur Trinkwasserversorgung anzuwenden und wird von den Tieren gerne und gesundheitsfördernd aufgenommen.

Ein Konzentrat zur Versorgung von Tieren mit *N*-(Aminoiminomethyl)-2-aminoethansäure über das Trinkwasser wird durch Auflösen von *N-*(Aminoiminomethyl)-2-aminoethansäure in einer Lösung, die Ameisensäure als entscheidende Komponente enthält hergestellt.

Gemäß der vorliegenden Erfindung kann die Ameisensäure in Reinform oder in verdünnter Form eingesetzt werden. Somit ist gemäß einer bevorzugten Ausführung auch ein Konzentrat Gegenstand der vorliegenden Erfindung, das eine Lösung umfasst die *N*-(Aminoiminomethyl)-2-aminoethansäure enthält, wobei die Lösung bezogen auf das Gesamtgewicht der Lösung enthält:
a) 1,0 bis 33,0 Gew.-% *N*-(Aminoiminomethyl)-2-aminoethansäure, und
b) mindestens 2,0 Gew.-% Ameisensäure, und
c) 0 bis 97,0 Gew.-% Wasser, und
wobei der Inhaltsstoff a) in der Lösung in gelöster Form vorliegt.

Gemäß der vorliegenden Erfindung beziehen sich die Gehaltsangaben auf den Gehalt in Lösung bei 25 °C.

Bevorzugt enthält die Lösung bezogen auf das Gesamtgewicht der Lösung c) 0,1 bis 95,0 Gew.-% Wasser. Weiter bevorzugt enthält die Lösung bezogen auf das Gesamtgewicht der Lösung c) 0,1 bis 50,0 Gew.-%, vorzugsweise 0,1 bis 40,0 Gew.-% und besonders bevorzugt 0,1 bis 30,0 Gew.-% Wasser.

Weiterhin umfasst das Konzentrat eine Lösung, die *N*-(Aminoiminomethyl)-2-aminoethansäure, Ameisensäure und gegebenenfalls Wasser enthält, wobei die Lösung bezogen auf das Gesamtgewicht der Lösung einen Anteil a) von 1,0 bis 33,0 Gew.-%, bevorzugt von 2,0 bis 33,0 Gew.-% weiter bevorzugt von 5,0 bis 33,0 Gew.-% und besonders bevorzugt von 8,0 bis 33,0 Gew.-% *N*-(Aminoiminomethyl)-2-aminoethansäure enthält.

Es sind auch Ausführungsformen von der Erfindung umfasst, in denen die Lösung bezogen auf das Gesamtgewicht der Lösung einen Anteil a) von 1,0 bis 30,0 Gew.-%, insbesondere von 2,0 bis 20,0 Gew.-% und mehr spezifiziert von 3,0 bis 10 Gew.-% *N*-(Aminoiminomethyl)-2-aminoethansäure enthält. Besonders bevorzugt ist ein Gehalt von 10,0 bis 20,0 Gew.-% *N*-(Aminoiminomethyl)-2-aminoethansäure.

Weiterhin bevorzugt umfasst das Konzentrat eine Lösung, die *N*-(Aminoiminomethyl)-2-aminoethansäure, Ameisensäure und gegebenenfalls Wasser enthält, wobei die Lösung bezogen auf das Gesamtgewicht der Lösung einen Anteil b) von mindestens 2,0 Gew.-%, von weiter bevorzugt mindestens 5,0 Gew.-% und besonders bevorzugt von mindestens 10 Gew.-%, weiter bevorzugt von mindestens 20 Gew.-% und insbesondere mindestens 30 Gew.-% Ameisensäure und gleichzeitig oder unabhängig hiervon von vorzugsweise höchstens 90,0 Gew.-%, weiter bevorzugt von höchstens 80 Gew.-%, weiter bevorzugt von höchstens 70 Gew.-% und besonders bevorzugt von höchstens 60 Gew.-% Ameisensäure enthält.

In jedem Fall und zwar unabhängig von den Anteilen an Wasser oder Ameisensäure liegt die *N*-(Aminoiminomethyl)-2-aminoethansäure in der Lösung in gelöster Form vor.

Erfindungsgemäß ist das Lösen von *N*-(Aminoiminomethyl)-2-aminoethansäure in Ameisensäure-haltigen Formulierungen. Es wurde überraschend gefunden, dass sich Ameisensäure und auch Gemische, die Ameisensäure in nennenswerten Anteilen enthält und zur Trinkwasseraufbereitung in landwirtschaftlichen Betrieben eingesetzt werden, dazu eignen, *N*-(Aminoiminomethyl)-2-aminoethansäure in hohen Konzentrationen zu lösen. Insbesondere der Vergleich der Löslichkeit von *N-*(Aminoiminomethyl)-2-aminoethansäure in anderen vergleichbaren Säuren zeigt die Vorteile von Ameisensäure (vgl. Beispiele). So löst sich *N*-(Aminoiminomethyl)-2-aminoethansäure kaum in Essigsäure oder in Propionsäure. Lediglich unter Verwendung von Milchsäure können größere Mengen an *N*-(Aminoiminomethyl)-2-aminoethansäure gelöst werden.

Neben der Ameisensäure und gegebenenfalls Wasser kann die Lösung bevorzugt somit auch weitere Inhaltsstoffe enthalten. So kann die Lösung als weiteren Inhaltsstoff d) eine weitere Säure oder dessen Salz enthalten.

Somit ist gemäß einer weiteren Ausführung auch ein Konzentrat Gegenstand der vorliegenden Erfindung, dessen Lösung als weiteren Inhaltsstoff d) enthält:
d) 0,1 bis 55 Gew.-% mindestens eine weitere Säure oder deren Salz.

Hierbei können sowohl anorganische Säuren als auch organische Säuren oder deren Salze Verwendung finden. Besonders bevorzugt kann die Lösung eine weitere Säure aus der Gruppe Essigsäure, Propionsäure, Sorbinsäure, Milchsäure, Brenztraubensäure oder Phosphorsäure enthalten. Als Salze dieser Säuren kann weiter bevorzugt ein Salz ausgewählt aus der Gruppe der Alkali- oder Erdalkalisalze dieser Säuren eingesetzt werden. Ganz besonders bevorzugt sind Natriumlactat, Natriumformiat, Natriumacetat und Natriumpropionat.

Hierin beschrieben ist auch ein Konzentrat, das eine Lösung umfasst, die *N*-(Aminoiminomethyl)-2-aminoethansäure, Milchsäure und gegebenenfalls Wasser umfasst, wobei die Lösung bezogen auf das Gesamtgewicht der Lösung enthält:
a) 0,5 bis 5,0 Gew.-% *N*-(Aminoiminomethyl)-2-aminoethansäure, und
b) 0,1 bis 99,5 Gew.-% Milchsäure, und
c) 0 bis 99,4 Gew.-% Wasser, und
wobei der Inhaltsstoff a) in der Lösung in gelöster Form vorliegt.

Hierin beschrieben ist auch ein Konzentrat, das eine Lösung umfasst, die /V-(Aminoiminomethyl)-2-aminoethansäure, Milchsäure und Wasser umfasst, wobei die Lösung bezogen auf das Gesamtgewicht der Lösung enthält:
a) 0,5 bis 5,0 Gew.-% *N*-(Aminoiminomethyl)-2-aminoethansäure, und
b) 10 bis 99,4 Gew.-% Milchsäure, und
c) 0,1 bis 89,5 Gew.-% Wasser, und
wobei der Inhaltsstoff a) in der Lösung in gelöster Form vorliegt.

Auch dieses Konzentrat weist diese Mengen an Inhaltstoffen bei 25 °C auf. Weiterhin ergänzen sich die Inhaltstoffe dieses Konzentrats gemäß der vorliegenden Erfindung unabhängig von der Art und Anzahl der Inhaltstoffe in jedem Fall zu 100 Gew.-%.

Die erhöhte Löslichkeit in Milchsäure ist ebenfalls vollkommen überraschend und nicht vorhersehbar.

Gemäß einer weiteren Ausführung der vorliegenden Erfindung kann die Lösung auch einen weiteren Inhaltsstoff aus der Gruppe der Formulierungshilfsstoffe und/oder der Modifizierungsmittel umfassen.

Somit ist auch ein Konzentrat Gegenstand der Erfindung, das eine Lösung umfasst, die als weiteren Inhaltsstoff e) enthält:
e) 0,1 bis 5 Gew.-% mindestens einen Formulierungshilfsstoff und/oder ein Modifizierungsmittel.

Beispiele für Modifizierungsmittel sind Glykole, Öle, Geschmacksstoffe.

Gemäß einer weiteren Ausführung der vorliegenden Erfindung kann das Konzentrat auch einen weiteren Inhaltsstoff aus der Gruppe der für Futtermittel zugelassenen Futtermittelzusatzstoffe umfassen, wobei dieser weitere Inhaltsstoff insbesondere ausgewählt ist aus der Gruppe bestehend aus Salzen, Spurenelementen und Aminosäuren.

Somit ist auch ein Konzentrat Gegenstand der Erfindung, das eine Lösung umfasst, die als weiteren Inhaltsstoff f) enthält: 0,1 bis 30 Gew.-% einen weiteren Stoff aus der Gruppe der in Futtermitteln zugelassenen Futtermittelzusatzstoffe, wobei der weitere Stoff ausgewählt wird aus der Gruppe Salze, Spurenelemente und Aminosäuren.

Beispiele für zugelassene Futtermittelzusatzstoffe sind Spulenelemente und Aminosäuren, insbesondere Lysin, Methionin, Glycin, Tyrosin und Tryptophan.

Beispiele für Salze sind Calciumchlorid, Natriumformiat, Natriumacetat.

Diese Futtermittelzusatzstoffe können enthalten sein, zwingend sind sie jedoch nicht enthalten. Somit ist gemäß einer besonderen Ausführung ein Konzentrat Gegenstand der vorliegenden Erfindung, dass aus der Lösung besteht. Ganz besonders bevorzugt ist ein Konzentrat, das aus der Lösung besteht, wobei die Lösung ihrerseits aus den Inhaltsstoffen a), b) und gegebenenfalls c), und gegebenenfalls d) und gegebenenfalls e) und gegebenenfalls f) besteht.

Diese Konzentrate sind hervorragend zur Herstellung einer Tränklösung für Schweine und Geflügel geeignet. Somit ist die Verwendung eines Konzentrats der hierin beschriebenen Art zur Herstellung einer Tränklösung für Schweine oder Geflügel von der Erfindung umfasst.

Die Löslichkeit von *N*-(Aminoiminomethyl)-2-aminoethansäure in den Mischungen ist vom Anteil an freier Ameisensäure abhängig. In einem Gemisch von Ameisensäure/Propionsäure/ Wasser von 40/40/20 (Gew.-%) wurde bei 25 °C eine Löslichkeit von 12,3 % bestimmt (vgl. Beispiele).

Somit kann ein Konzentrat zur Verfügung gestellt werden, dass in der Mast von Geflügel und Schweinen hervorragend einsetzbar ist. Neben dem gewünschten Futtermittelzusatzstoff *N*-(Aminoimino-methyl)-2-aminoethansäure enthält die Lösung ausschließlich Stoffe, die bereits in der Mast zugelassen sind und keinen schädlichen Einfluss auf die Mastleistung oder die Gesundheit der Tiere haben.

Der maximale Gehalt an *N*-(Aminoiminomethyl)-2-aminoethansäure in den Mischungen ist vom Anteil an freier Ameisensäure abhängig, kann aber unterhalb der Sättigungsgrenze beliebig eingestellt werden. Er liegt im Bereich von 1 - 33 Gew.-%, besonders bevorzugt bei 10 - 20 Gew.-%.

*N*-(Aminoiminomethyl)-2-aminoethansäure ist eine Guanidinocarbonsäure, die einen isoelektrischen Punkt bei pH 8,5 aufweist. Abhängig vom pH-Wert einer Lösung kann die Verbindung in der Lösung somit als inneres Salz mit Ladungsausgleich oder als Kation oder als Anion vorliegen. Erfindungswesentlich liegt die *N-*(Aminoiminomethyl)-2-aminoethansäure in den erfindungsgemäßen Lösungen überwiegend in zwitterionischer Form und nicht als Formiat-Salz vor, das durch eine außerhalb der Guanidinocarbonsäure lokalisierten Ladung neutralisiert wird.

Dies wird durch den Vergleich der pKs-Werte deutlich.

pKs-Wert der Säuregruppe in *N*-(Aminoiminomethyl)-2-aminoethansäure: 3,3 +/- 0,1 (kalkuliert, unter Verwendung von Advanced Chemistry Development (ACD/Labs) Software V11.02 (^{©} 1994-2019 ACD/Labs).

pKs-Wert Ameisensäure: 3,77 (H.C. Brown et al. Determination of Organic Structures by Physical Methods, Academic Press, New York, 1955).

pKs-Wert Milchsäure: 3,90 +/- 0,11 (Römpp Online, Georg Thieme Verlag). Ameisensäure und Milchsäure sind damit schwächere Säuren, als die Säuregruppe in *N*-(Aminoiminomethyl)-2-aminoethansäure.

Auch beim Eindampfen einer Lösung von *N*-(Aminoiminomethyl)-2-aminoethansäure in Ameisensäure unter schonenden Bedingungen im Vakuum verbleibt als Rückstand ausschließlich *N*-(Aminoiminomethyl)-2-aminoethansäure und nicht das Ameisensäure-Salz davon.

Somit liegt *N*-(Aminoiminomethyl)-2-aminoethansäure erfindungsgemäß in Lösung überwiegend als solche und nicht als Salz oder als Komplex vor. Es kann ein Konzentrat bereitgestellt werden, das eine über das bekannte Maß erhöhte Konzentration an Wirkstoff aufweist. In der Anwendung hat diese Art der Bereitstellung immense Vorteile. Dass die *N*-(Aminoiminomethyl)-2-aminoethansäure in Ameisensäure-haltigen Lösungen eine deutlich bessere Löslichkeit als in Wasser oder anderen vergleichbaren Säuren aufweist ist überraschend und stellt den eigentlichen Kern der Erfindung dar.

Es bietet sich also an, *N*-(Aminoiminomethyl)-2-aminoethansäure in Flüssigformulierungen auf Basis Ameisensäure zu lösen, um das Konzentrat zur Bereitung einer Tränklösung für Masttiere zu verwenden.

Bevorzugt ist eine wässrige Mischung aus *N*-(Aminoiminomethyl)-2-aminoethansäure und Ameisensäure mit einer Konzentration von 0,5 - 100 %, die weitere organische oder anorganische Säuren, Salze, Spurenelemente, Aminosäuren und Modifizierungsmittel, die für die Tierernährung zugelassen sind, enthalten kann. Diese zusätzlichen Stoffe sind nicht erfindungswesentlich und zeigen nur die anwendungstechnischen Möglichkeiten.

Beispiele für weitere Säuren sind Propionsäure, Essigsäure, Sorbinsäure, Milchsäure, Brenztraubensäure oder Phosphorsäure.

Beispiele für Salze sind Calciumchlorid, Natriumformiat, Natriumacetat.

Beispiele für Aminosäuren sind Lysin, Methionin, Glycin Tyrosin, Tryptophan.

Beispiele für Modifizierungsmittel sind Glykole, Öle, Geschmacksstoffe.

Bevorzugt weist die Ameisensäure-Lösung zum Mischen mit *N*-(Aminoiminomethyl)-2-aminoethansäure einen Gehalt von 40 - 80 Gew.-% auf.

Somit ist auch ein Konzentrat Gegenstand umfassend eine wässrige Lösung enthaltend *N*-(Aminoiminomethyl)-2-aminoethansäure, Ameisensäure und weitere organische oder anorganische Säuren, Salze, Spurenelemente, Aminosäuren und Modifizierungsmittel, die für die Tierernährung zugelassen sind.

Es ist auch erfindungswesentlich, dass *N*-(Aminoiminomethyl)-2-aminoethansäure im Konzentrat und auch in der trinkfähigen Verdünnung nicht von biologischen Keimen abgebaut wird. Die marktüblichen Formulierungen auf Basis Ameisensäure werden gerade deswegen in den Trinkwassersystemen benutzt, um diese keimfrei zu halten oder Keime abzutöten.

Die Ameisensäure enthaltenden Konzentrate weisen einen sehr tiefen pH-Wert auf. Der Zusatz von *N*-(Aminoiminomethyl)-2-aminoethansäure bewirkt lediglich eine geringe Pufferwirkung. Üblicherweise werden Ameisensäure-haltige Konzentrate gezielt dazu verwendet, den pH-Wert in der trinkfähigen Verdünnung leicht sauer einzustellen. Dazu werden definierte Mengen des Konzentrats über Dosiereinrichtungen dem Trinkwasser zugemischt. Das Mischungsverhältnis liegt in der Größenordnung von 1 - 2 Teile Konzentrat zu 1000 Teilen Wasser.

Dies hat verschiedene positive Auswirkungen auf die Verdauung der Masttiere. Durch den Anteil von *N*-(Aminoiminomethyl)-2-aminoethansäure wird dieser Effekt nicht beeinflusst.

Masttiere nehmen im Durchschnitt etwa doppelt so viel Wasser wie Futter zu sich. Eine Konzentration von *N*-(Aminoiminomethyl)-2-aminoethansäure im Trinkwasser sollte deshalb im Bereich von 300 mg/Liter liegen, wenn *N*-(Aminoiminomethyl)-2-aminoethansäure ausschließlich über das Wasser verabreicht werden soll. Die Löslichkeit von *N*-(Aminoiminomethyl)-2-aminoethansäure in Wasser ist etwa um den Faktor 10 höher. Bei der Zugabe zu Wasser fällt deswegen kein Feststoff aus.

Für Konzentrate von *N*-(Aminoiminomethyl)-2-aminoethansäure in Ameisensäurehaltigen Lösungen bedeutet dies, dass eine Konzentration von > 10 Gew.-% für diesen Fall erforderlich ist, um eine ausschließliche Bereitstellung der üblichen Menge von *N*-(Aminoiminomethyl)-2-aminoethansäure zu erreichen. Bei einer Ergänzungsgabe sind auch geringere Gehalte anwendbar.

Mit Ameisensäure, auch in kommerziellen Mischungen zur Behandlung von Trinkwasser wird diese Konzentration erreicht, während sie mit anderen organischen Säuren nicht erreicht wird. Der enorme Unterschied in der Löslichkeit lässt sich nicht über die Säurestärke erklären. Er war auch für einen Fachmann unerwartet.

Salze von *N*-(Aminoiminomethyl)-2-aminoethansäure mit den anorganischen Säuren Salzsäure und Schwefelsäure weisen zwar teilweise ebenfalls eine hohe Löslichkeit in Wasser auf, sie sind auf Dauer aber bei den üblichen pH-Werten korrosiv gegenüber den Installationen und haben Nachteile hinsichtlich der keimtötenden Wirkung, sowie in der Akzeptanz bei Tieren. Sie sind derzeit auch noch nicht zur Fütterung zugelassen.

Das Lösen von *N*-(Aminoiminomethyl)-2-aminoethansäure in Ameisensäure oder in existierenden Säureformulierungen bietet den Vorteil, dass beliebige Mischungen hergestellt werden können und der Landwirt keine zusätzlichen Container bereithalten muss. Es sind auch keine zusätzlichen, teuren Verpackungen (für Flüssigkeiten) erforderlich.

### Beispiele

### Beispiel 1: Allgemeine Vorgehensweise bei der Bestimmung der Löslichkeit von N-(Aminoiminomethyl)-2-aminoethansäure in Ameisensäure.

*N*-(Aminoiminomethyl)-2-aminoethansäure mit einem Gehalt von 99,5 % wurde in einem Mörser zu einem feinen Pulver vermahlen. 50 g der Ameisensäure wurde in einem gerührten Becherglas vorgelegt und auf 25 +/- 2 °C thermostatisiert. In diese Säure wurde /V-(Aminoiminomethyl)-2-aminoethansäure in Portionen von ca. 250 Milligramm eingetragen bis sich der Feststoff innerhalb von 30 Minuten nicht mehr klar löste. Die Löslichkeit wurde anhand der eingetragenen Menge bestimmt, bei der noch eine klare Lösung erhalten wurde. Eine ungelöste Menge von ca. 50 mg ist noch deutlich erkennbar. Die relative Ungenauigkeit dieser Methode beträgt also 0,5 Gew.-%. Es wurden die in Tabelle 1 aufgeführten Werte erhalten.

**Tabelle 1: Löslichkeit N-(Aminoiminomethyl)-2-aminoethansäure in Ameisensäure unterschiedlicher Konzentration**

| **50 g Säure (Gehalt in %)** | **Gelöste Menge *N*-(Aminoiminomethyl)-2-aminoethansäure in g** | **Entspricht Löslichkeit in Gew.-% (bezogen auf die Lösung)** |
|---|---|---|
| Ameisensäure 100 % | 24,60 | 32,9 |
| Ameisensäure 80 %-ig in Wasser | 15,75 | 23,9 |
| Ameisensäure 40 %-ig in Wasser | 5,40 | 9,7 |
| Ameisensäure 5 %-ig in Wasser | 1,05 | 2,1 |

Die Ergebnisse zeigen, dass die Löslichkeit von *N*-(Aminoiminomethyl)-2-aminoethansäure in Ameisensäure von der Konzentration abhängig ist. Die gelöste Menge an *N*-(Aminoimino-methyl)-2-aminoethansäure in der Ameisensäure übersteigt die Höchstmenge an gelöster Menge in Wasser jedoch deutlich (0,4 g in 100 ml Wasser bei 25 °C, entspricht 0,4 Gew.-%).

### Beispiel 2 (Vergleichsbeispiel): Löslichkeit von N-(Aminoiminomethyl)-2-aminoethansäure in weiteren Säuren

Analog der Vorgehensweise in Beispiel 1 wurde *N*-(Aminoiminomethyl)-2-aminoethansäure in nachfolgend aufgeführte Säuren eingetragen und die Löslichkeit bestimmt. Es wurden die in Tabelle 2 aufgeführten Werte erhalten.

**Tabelle 2: Löslichkeit N-(Aminoiminomethyl)-2-aminoethansäure in verschiedenen Säuren**

| **50 g Säure (Gehalt in %)** | **Gelöste Menge *N*-(Aminoiminomethyl)-2-aminoethansäure in g** | **Entspricht Löslichkeit in Gew.-% (bezogen auf die Lösung)** |
|---|---|---|
| Essigsäure 80 %-ig in Wasser | < 0,5 | < 1 |
| Propionsäure 80 %-ig in Wasser | < 0,5 | < 1 |
| Milchsäure 80 %-ig in Wasser | 2,45 | 4,7 |
| Brenztraubensäure 100 %-ig | 0,25 | < 1 |
| Salzsäure 6 %-ig in Wasser | 10,4 | 17,2 (gelöst als Hydrochlorid) |
| Schwefelsäure 9 %-ig in Wasser | 3,60 | 6,7 (gelöst als Sulfat, bei längerem Stehen fällt wieder Feststoff aus) |
| Ascorbinsäure 10 %-ig in Wasser | < 0,5 | < 1 |
| Zitronensäure 20 %-ig in Wasser | 1,1 | 2,1 |

Das Ergebnis zeigt, dass *N*-(Aminoiminomethyl)-2-aminoethansäure in anderen Säuren wesentlich schlechter löslich ist, als in Ameisensäure. Lediglich in Milchsäure oder in starken anorganischen Säuren wie Salzsäure ist eine hohe Löslichkeit gegeben, allerdings dann unter Salzbildung.

### Beispiel 3: Löslichkeit von N-(Aminoiminomethyl)-2-aminoethansäure in Gemischen von Ameisensäure mit weiteren Säuren

Aus Ameisensäure und weiteren organischen Säuren wurden Gemische hergestellt.

Analog der Vorgehensweise in Beispiel 1 wurde *N*-(Aminoiminomethyl)-2-aminoethansäure in nachfolgend aufgeführte Gemische eingetragen und die Löslichkeit bestimmt. Es wurden die in Tabelle 3 aufgeführten Werte erhalten.

**Tabelle 3: Löslichkeit N-(Aminoiminomethyl)-2-aminoethansäure in Säuregemischen**

| **50 g Säuregemisch (Inhaltsstoffe in Gew.-% bezogen auf das Säuregemisch)** | **Gelöste Menge N-(Aminoiminomethyl)-2-aminoethansäure in g** | **Entspricht Löslichkeit in Gew.-% (bezogen auf die Lösung)** |
|---|---|---|
| *Ameisensäure 64 % | 12,5 | 20,0 |
| *Propionsäure 25 % | | |
| Wasser 11 % | | |
| *Ameisensäure 42,5 % | 5,4 | 9,7 |
| *Propionsäure 50 % | | |
| Wasser 7,5 % | | |
| *Ameisensäure 40 % | 7,0 | 12,3 |
| *Propionsäure 40 % | | |
| Wasser 20% | | |
| *Ameisensäure 40 % | 6,9 | 12,1 |
| *Essigsäure 40 % | | |
| Wasser 20 % | | |
| *Ameisensäure 40 % | 7,2 | 12,6 |
| *Milchsäure 40 % | | |
| Wasser 20% | | |

| | | |
|---|---|---|
| * die Konzentration der jeweiligen Säure beträgt 100 % | | |

Das Ergebnis zeigt dass die Löslichkeit von *N*-(Aminoiminomethyl)-2-aminoethansäure in Gemischen von Ameisensäure und weiteren Säuren vom Gehalt an Ameisensäure abhängig ist.

### Beispiel 4: Löslichkeit von N-(Aminoiminomethyl)-2-aminoethansäure in Gemischen von Ameisensäure mit weiteren Säuren und Puffersubstanzen.

Aus Ameisensäure und weiteren organischen Säuren sowie Natriumsalze dieser Säuren als Puffersubstanzen wurden Gemische hergestellt.

Analog der Vorgehensweise in Beispiel 1 wurde *N*-(Aminoiminomethyl)-2-aminoethansäure in nachfolgend aufgeführte Gemische eingetragen und die Löslichkeit bestimmt. Es wurden die in Tabelle 4 aufgeführten Werte erhalten.

**Tabelle 4: Löslichkeit N-(Aminoiminomethyl)-2-aminoethansäure in Säuregemischen enthaltend Puffersubstanzen**

| **50 g Gemisch (Gehalte der Inhaltsstoffe in Gew.-% bezogen auf das Gemisch)** | **Gelöste Menge *N*-(Aminoiminomethyl)-2-aminoethansäure in g** | **Entspricht Löslichkeit in Gew.-% (bezogen auf die Lösung)** |
|---|---|---|
| *Ameisensäure 39 % | 1,3 | 2,5 |
| Na-Formiat 23 % | | |
| *Propionsäure 18 % | | |
| Wasser 20 % | | |
| *Ameisensäure 20 % | 2,2 | 4,2 |
| *Propionsäure 35 % | | |
| Na-Formiat 21 % | | |
| Na-Propionat 4 % | | |
| Wasser 20 % | | |
| *Ameisensäure 50 % | 3,75 | 7,0 |
| Na-Lactat 20 % | | |
| Wasser 30 % | | |

| | | |
|---|---|---|
| * die Konzentration der jeweiligen Säure beträgt 100 % | | |

### Beispiel 5: Bestimmung der gelösten Form von N-(Aminoiminomethyl)-2-aminoethansäure in Ameisensäure

6,0 g *N*-(Aminoiminomethyl)-2-aminoethansäure wurden bei Raumtemperatur in 20 g Ameisensäure (100 %) gelöst und diese Lösung am Rotationsverdampfer bei 60 °C und einem Vakuum von 30 mbar schonend bis zur Trockene eingedampft. Der isolierte Feststoff (5,96 g) bestand zu 98,3 % aus *N*-(Aminoiminomethyl)-2-aminoethansäure. Das IR-Spektrum war identisch mit dem Spektrum der Ausgangssubstanz.

Weiterhin wurden 10,0 g *N*-(Aminoiminomethyl)-2-aminoethansäure in 20 g Ameisensäure (100 %) eine Stunde bei Raumtemperatur gerührt. Der nicht gelöste Anteil wurde abfiltriert und bei 60 °C im Vakuum getrocknet. Er bestand zu 98,6 % aus *N*-(Aminoiminomethyl)-2-aminoethansäure. Das IR-Spektrum war identisch mit dem Spektrum der Ausgangssubstanz.

Die Ergebnisse zeigen, dass sich *N*-(Aminoiminomethyl)-2-aminoethansäure ohne Bildung eines Salzes oder einer Anlagerungsverbindung in Ameisensäure löst.

### Beispiel 6: Bestimmung der Form von N-(Aminoiminomethyl)-2-aminoethansäure in Salzsäure (Vergleichsbeispiel)

Die Lösung von *N*-(Aminoiminomethyl)-2-aminoethansäure in Salzsäure aus Beispiel 3 wurde am Rotationsverdampfer bei 60 °C und einem Vakuum von ca. 30 mbar schonend bis zur Trockene eingedampft. Der erhaltene Feststoff bestand aus dem Hydrochlorid von *N*-(Aminoiminomethyl)-2-aminoethansäure.

Das Ergebnis zeigt, dass sich aus *N*-(Aminoiminomethyl)-2-aminoethansäure in starken Säuren im Unterschied zu Ameisensäure ein Salz bildet.

### Beispiel 7: Herstellen von behandeltem Tränkwasser

Es wurden Mischungen von Ameisensäure mit weiteren Säuren und teilweise Puffersubstanzen hergestellt. In diese Mischungen wurde bis knapp unterhalb der Löslichkeitsgrenze bei 25 °C *N*-(Aminoiminomethyl)-2-aminoethansäure (GAA) eingetragen und klar gelöst.

Von dieser Lösung wurde jeweils 0,1 % (Verdünnung 1:1000) und 0,2 % (Verdünnung 1:500) zu Leitungswasser dosiert. In allen Fällen entstand ein vollkommen klares Tränkwasser. Die resultierenden pH-Werte zeigt nachfolgende Tabelle 5.

**Tabelle 5: pH-Werte verschiedener Tränk-Lösungen enthaltend N-(Aminoiminomethyl)-2-aminoethansäure hergestellt aus Konzentraten und Trinkwasser**

| **Konzentrat (Gehalte der Inhaltsstoffe in Gew.-% bezogen auf das Konzentrat)** | **pH-Wert bei Verdünnung 1:1000** | **pH-Wert bei Verdünnung 1:500** |
|---|---|---|
| *Ameisensäure 61 % | 3,07 | 2,95 |
| *N*-(Aminoiminomethyl)-2-aminoethansäure 24 % | | |
| Wasser 15 % | | |
| *Ameisensäure 35 % | 3,14 | 2,97 |
| *Propionsäure 35 % | | |
| *N*-(Aminoiminomethyl)-2-aminoethansäure 12,5 % | | |
| Wasser 17,5 % | | |
| *Ameisensäure 47 % | 3,10 | 2,97 |
| Na-Lactat 18 % | | |
| *N*-(Aminoiminomethyl)-2-aminoethansäure 7 % | | |
| Wasser 28 % | | |
| *Ameisensäure 100 % | 2,73 | 2,57 |
| *Ameisensäure 50 % | 2,88 | 2,73 |
| Wasser 50 % | | |

| | | |
|---|---|---|
| * die Konzentration der jeweiligen Säure beträgt 100 % | | |

Die Tabelle zeigt, dass *N*-(Aminoiminomethyl)-2-aminoethansäure in Gemischen, die Ameisensäure enthalten beim Verdünnen auf eine gebrauchsfertige Tränklösung eine geringe Pufferwirkung entfaltet und die resultierenden pH-Werte leicht höher sind, als ohne *N*-(Aminoiminomethyl)-2-aminoethansäure. Die Anteile an NatriumSalzen von Säuren haben keinen wesentlichen zusätzlichen Effekt.

Da die resultierenden pH-Werte zwar für eine Darreichung des Trinkwassers noch akzeptabel, aber sehr niedrig sind, ist durch Zugabe von *N*-(Aminoiminomethyl)-2-aminoethansäure ein positiver Effekt zu beobachten.

## Patentansprüche

1. Konzentrat umfassend eine Lösung enthaltend *N*-(Aminoiminomethyl)-2-aminoethansäure **dadurch gekennzeichnet, dass** die Lösung bezogen auf das Gesamtgewicht der Lösung enthält:
a) 1,0 bis 33,0 Gew.-% *N*-(Aminoiminomethyl)-2-aminoethansäure, und
b) mindestens 2,0 Gew.-% Ameisensäure und
wobei der Inhaltsstoff a) in der Lösung in gelöster Form vorliegt.

2. Konzentrat nach Anspruch 1, **dadurch gekennzeichnet, dass** die Lösung als weiteren Inhaltsstoff c) enthält:
c) 0,1 bis 95,0 Gew.-% Wasser.

3. Konzentrat nach Anspruch 1 oder 2, **dadurch gekennzeichnet, dass** die Lösung als weiteren Inhaltsstoff d) enthält
d) 0,1 bis 55 Gew.-% mindestens eine weitere Säure oder deren Salz.

4. Konzentrat nach Anspruch 3, **dadurch gekennzeichnet, dass** die Säure ausgewählt wird aus der Gruppe von Säuren enthaltend Essigsäure, Propionsäure, Sorbinsäure, Milchsäure, Brenztraubensäure und Phosphorsäure.

5. Konzentrat nach Anspruch 3, **dadurch gekennzeichnet, dass** das Salz ausgewählt wird aus der Gruppe der Alkali- oder Erdalkalisalze der Säure.

6. Konzentrat nach einem der zuvor genannten Ansprüche, **dadurch gekennzeichnet, dass** die Lösung als weiteren Inhaltsstoff e) enthält:
e) 0,1 bis 5 Gew.-% mindestens einen Formulierungshilfsstoff und/oder ein Modifizierungsmittel.

7. Konzentrat nach einem der zuvor genannten Ansprüche, **dadurch gekennzeichnet, dass** das Konzentrat als weiteren Inhaltstoff f) enthält:
f) 0,1 bis 30 Gew.-% einen weiteren Stoff aus der Gruppe der in Futtermitteln zugelassenen Futtermittelzusatzstoffe, wobei der weitere Stoff ausgewählt wird aus der Gruppe Salze, Spurenelemente, Aminosäuren.

8. Verwendung eines Konzentrats gemäß einem der vorgenannten Ansprüche zur Herstellung einer Tränklösung für Schweine oder Geflügel.

## Claims

1. A concentrate comprising a solution comprising *N*-(aminoiminomethyl)-2-aminoethanoic acid **characterized in that** the solution comprises, based on the total weight of the solution:
a) 1.0 to 33.0 wt. % of *N*-(aminoiminomethyl)-2-aminoethanoic acid, and
b) at least 2.0 wt. % of formic acid and
wherein ingredient a) is present in the solution in dissolved form.

2. Concentrate according to claim 1, **characterized in that** the solution comprises c) as a further ingredient:
c) 0.1 to 95.0 wt. % of water.

3. Concentrate according to claim 1 or 2, **characterized in that** the solution comprises d) as a further ingredient:
d) 0.1 to 55 wt. % of at least one further acid or a salt thereof.

4. Concentrate according to claim 3, **characterized in that** the acid is selected from the group of acids comprising acetic acid, propionic acid, sorbic acid, lactic acid, pyruvic acid and phosphoric acid.

5. Concentrate according to claim 3, **characterized in that** the salt is selected from the group of alkaline or alkaline earth salts of the acid.

6. Concentrate according to any one of the preceding claims, **characterized in that** the solution comprises e) as a further ingredient:
e) 0.1 to 5 wt. % of at least one formulation adjuvant and/or a modifier.

7. Concentrate according to any one of the preceding claims, **characterized in that** the concentrate comprises f) as a further ingredient:
f) 0.1 to 30 wt. % of a further ingredient from the group of feed additives admitted in feed, the further ingredient being selected from the group consisting of salts, trace elements and amino acids.

8. Use of a concentrate according to any one of the preceding claims for preparing a drinkable solution for pigs or poultry.

## Revendications

1. Concentré comprenant une solution contenant de l'acide N-(aminoiminométhyl)-2-aminoéthanoïque, **caractérisé en ce que** la solution contient, par rapport au poids total de la solution :
a) 1,0 à 33,0 % en poids d'acide N-(aminoiminométhyl)-2-aminoéthanoïque, et
b) au moins 2,0 % en poids d'acide formique et dans lequel l'ingrédient a) est présent dans la solution sous forme dissoute.

2. Concentré selon la revendication 1, **caractérisé en ce que** la solution contient comme autre ingrédient c) :
c) 0,1 à 95,0 % en poids d'eau.

3. Concentré selon la revendication 1 ou 2, **caractérisé en ce que** la solution contient comme autre ingrédient d)
d) 0,1 à 55 % en poids d'au moins un autre acide ou de son sel.

4. Concentré selon la revendication 3, **caractérisé en ce que** l'acide est choisi dans le groupe d'acides comprenant l'acide acétique, l'acide propionique, l'acide sorbique, l'acide lactique, l'acide pyruvique et l'acide phosphorique.

5. Concentré selon la revendication 3, **caractérisé en ce que** le sel est choisi dans le groupe des sels alcalins ou alcalino-terreux de l'acide.

6. Concentré selon l'une des revendications précédentes, **caractérisé en ce que** la solution contient comme autre ingrédient e) :
e) 0,1 à 5 % en poids d'au moins un adjuvant de formulation et/ou un agent de modification.

7. Concentré selon l'une des revendications précédentes, **caractérisé en ce que** le concentré contient comme autre ingrédient f) :
f) 0,1 à 30 % en poids d'une autre substance du groupe des additifs alimentaires autorisés dans les aliments pour animaux, dans lequel l'autre substance est choisie dans le groupe des sels, des oligo-éléments, des acides aminés.

8. Utilisation d'un concentré selon l'une des revendications précédentes pour la préparation d'une solution d'abreuvement pour porcs ou volailles.
